# FASCICULE DE BREVET EUROPEEN

(11) **EP 3 898 457 B1**
(45) Date de publication et mention de la délivrance du brevet: **07.09.2022**
(21) Numéro de dépôt: 19827751.9
(22) Date de dépôt: 20.12.2019
(51) Int. Cl.: B65G 1/137, B65G 65/00

(54) **SYSTEME DE CONVOYAGE D'OBJETS COMPRENANT UN CONVOYEUR ET UN CHARIOT**
SYSTEM ZUM FÖRDERN VON GEGENSTÄNDEN MIT EINEM FÖRDERER UND EINEM LAUFWAGEN
SYSTEM FOR CONVEYING OBJECTS COMPRISING A CONVEYOR AND A TROLLEY

(30) Priorité: 21.12.2018 FR 1873976
(43) Date de publication de la demande: 27.10.2021
(73) Titulaire: Solystic, 92220 Bagneux (FR)
(72) Inventeur: KARA, Karim, 26120 CHABEUIL (FR); DANJAUME, Alain, 26300 BESAYES (FR); MOULLARD, Eric, 07500 GUILHERAND GRANGES (FR)
(74) Mandataire: IP Trust
(86) Numéro de dépôt international: PCT/EP2019/086832
(87) Numéro de publication internationale: WO 2020/128065

(56) Documents cités:
- DE-A1-102015 001 540
- JP-A- H09 118 431
- JP-A- 2000 247 412
- JP-A- 2009 227 424
- JP-B2- 2 992 414
- US-A- 4 508 484

## Description

### Domaine technique

Le domaine de l'invention est celui des systèmes de convoyage d'objets.

L'invention concerne plus particulièrement un système de convoyage d'objets comprenant un convoyeur d'objets s'étendant entre une extrémité amont et une extrémité aval, et un chariot navette motorisé à plateau porteur d'objet, ledit chariot étant conçu pour accoster aux extrémités aval et amont du convoyeur de sorte à réaliser un transfert d'objet entre le chariot et le convoyeur.

### Technique antérieure

Il existe aujourd'hui de nombreux systèmes de convoyage d'objets utilisant un convoyeur et un chariot navette motorisés coopérant mutuellement pour réaliser un transfert des objets l'un vers l'autre.

Le document FR 3049481 décrit à ce propos un système de transfert automatique d'un objet, ici un panier kit, comportant un chariot mobile autoguidé à plateau porteur d'objet et un convoyeur d'objets motorisé comprenant une zone d'entrée et une zone de sortie chacune équipée d'un actionneur de préhension motorisé.

L'ensemble du système de convoyage composé du convoyeur, de l'actionneur de préhension et du chariot est motorisé, ce qui engendre un coût important en énergie.

De plus, cet ensemble requiert notamment l'installation supplémentaire de cellules de reconnaissance de suivi, de sources d'alimentation et des moyens de communication dédiés pour pouvoir fonctionner.

Un autre système de convoyage d'objets utilisant un convoyeur et un chariot navette motorisés est également décrit dans le document JP 2009227424 A, qui divulgue un système de convoyage selon le préambule de la revendication

Le but de l'invention est donc de remédier à ces inconvénients en proposant un système simplifié et plus fiable.

### Résumé de l'invention

A cet effet, l'invention a pour objet un système de convoyage d'objets comprenant un convoyeur d'objets s'étendant entre une extrémité amont et une extrémité aval, et un chariot navette motorisé à plateau porteur d'objet, ledit chariot étant conçu pour accoster aux extrémités aval et amont du convoyeur de sorte à réaliser un transfert d'objet entre le chariot et le convoyeur, caractérisé en ce que le convoyeur est un convoyeur gravitaire sous lequel s'étend une rampe, et en ce que le chariot est apte à circuler sous le convoyeur et comprend un levier mobile en déplacement vertical par rapport au plateau, ledit levier étant conçu pour coopérer avec la rampe pendant le déplacement du chariot sous le convoyeur de telle sorte qu'en suivant la rampe le levier se déplace entre une position escamotée dans laquelle il s'efface sous le convoyeur et une position déployée dans laquelle il s'étend en saillie au dessus du convoyeur pour entrainer en déplacement un objet sur le convoyeur, le convoyeur comprend à son extrémité aval une première butée escamotable conçue pour bloquer un objet à l'extrémité aval du convoyeur, et en ce que le chariot comprend un organe de poussée conçue pour coopérer avec la première butée lors de son déplacement sous l'extrémité aval du convoyeur de sorte qu'au contact de l'organe de poussée la première butée est écartée sur les côtés du convoyeur pour autoriser le transfert de l'objet sur le plateau du chariot.

L'idée à la base de l'invention consiste à utiliser un convoyeur gravitaire comme support de déplacement pour les objets et un chariot navette comme source d'énergie pour déplacer les objets sur le convoyeur.

Grâce au système selon l'invention, le chariot navette à un rôle double consistant d'une part à être acteur du transfert des objets sur le convoyeur et d'autre part à être acteur du déplacement des objets sur le convoyeur.

Grâce aux frottements très limités des objets sur le convoyeur gravitaire, l'énergie nécessaire pour déplacer les objets sur le convoyeur par le chariot navette est très faible.

L'idée consiste également à faire circuler le chariot navette sous le convoyeur de sorte à limiter l'emprise au sol du système de convoyage tout en optimisant le cycle de trajet du chariot.

Le système selon l'invention permet également d'avoir une vitesse de convoyage dépendante de la vitesse de déplacement du chariot. Il est ainsi plus simple de gérer l'ensemble des stocks d'objets et l'intégralité d'une flotte de chariots.

Le système de convoyage d'objets selon l'invention présente également les particularités suivantes :
- le convoyeur comprend une portion de convoyage ascendante qui s'étend depuis son extrémité amont, la rampe étant conçue pour maintenir le levier en position déployée le long de ladite portion de convoyage ascendante ;
- le convoyeur comprend une portion de convoyage descendante qui s'étend jusqu'à son extrémité aval dans le prolongement de la portion de convoyage ascendante ;

- la portion de convoyage descendante du convoyeur comprend une rampe dont la pente se relève vers l'extrémité aval du convoyeur de sorte à positionner le levier de la position escamotée à la position déployée.
- le convoyeur comprend une seconde butée escamotable en amont de l'extrémité aval du convoyeur, ladite seconde butée étant conçue pour être déplacée entre une position escamotée dans laquelle elle autorise le déplacement d'un objet vers l'extrémité aval du convoyeur et une position fermée dans laquelle elle bloque un objet en amont de l'extrémité aval du convoyeur, la seconde butée comprenant un élément en saillie sur le convoyeur conçu coopérer avec un objet disposé en extrémité aval du convoyeur pour passer de la position escamotée à la position fermée ;
- le plateau du chariot se présente sous la forme d'une fourche et le convoyeur sous la forme de deux sections parallèles, la fourche étant conçue pour se peigner entre les sections du convoyeur lorsque le chariot se déplace sous l'extrémité amont et/ou aval du convoyeur ;
- le levier du chariot se présente sous la forme d'une fourche conçue pour se peigner entre les sections du convoyeur lorsque le chariot se déplace sous le convoyeur.

### Présentation sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
- la figure 1 est une représentation schématique en perspective du système de convoyage selon l'invention ;
- les figures 2a à 2c sont des représentations schématiques en perspective du convoyeur selon l'invention dans une cinétique de blocage d'un objet dans un sas de retenu du convoyeur ;
- la figure 3 est une représentation schématique en perspective du convoyeur selon l'invention au niveau de la sortie d'évacuation du convoyeur dans laquelle des objets sont en attente de transfert sur chariot ;
- les figures 4a à 4d sont des représentations très schématiques en perspective du convoyeur selon l'invention dans une cinétique de transfert d'un objet de la sortie d'évacuation en objets sur un chariot.

### Description des modes de réalisation

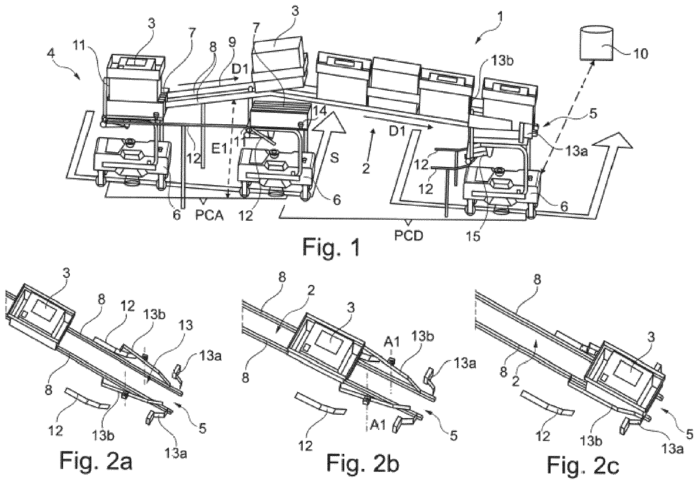

On a représenté sur la figure 1 un système 1 de convoyage selon l'invention comprenant un convoyeur 2 d'objets 3 s'étendant selon une certaine direction D1 de convoyage entre une extrémité amont 4 et une extrémité aval 5 et au moins un chariot navette motorisé 6 à plateau 7 porteur d'objet, ci-après nommé le chariot 6.

Le chariot 6 et le convoyeur 2 selon l'invention sont conçus pour coopérer mutuellement afin de réaliser dans une premier temps un transfert d'objet 3 du chariot 6 sur le convoyeur 2 par l'extrémité amont 4 du convoyeur 2, puis, à déplacer l'objet 3 sur le convoyeur 2 de l'extrémité amont 4 vers l'extrémité aval 5, et enfin, à réaliser un transfert de l'objet 3 sur le chariot 6 par l'extrémité aval 5 du convoyeur 2.

On comprendra que le système 1 de convoyage selon l'invention sera particulièrement bien adapté pour être intégré dans une plateforme logistique afin de traiter des objets de type paquets/colis.

Le convoyeur 2 selon l'invention est ici un convoyeur gravitaire comprenant au moins deux sections 8 parallèles formant un tapis 9 de convoyage qui s'étendent entre l'extrémité amont 4 du convoyeur et l'extrémité aval 5 du convoyeur 2.

Chaque section 8 comprend un moyen de convoyage à frottements limités, comme des rouleaux libres disposés successivement le long des sections ou bien une surface continue à revêtement lisse.

Le convoyeur 2 selon l'invention représenté sur la figure 1 comprend également une portion de convoyage ascendante PCA qui s'étend depuis l'extrémité amont 4 et une portion de convoyage descendante PCD qui s'étend dans le prolongement la portion de convoyage ascendante PCA jusqu'à l'extrémité aval 5.

Le convoyeur 2 est également surélevé de sorte à laisser un espace libre, représenté par la flèche E1, entre le sol S et le tapis 9 de convoyage du convoyeur 2.

Le chariot 6 peut ainsi circuler sous le convoyeur 2 selon la direction D1 de convoyage sous la commande d'une unité de contrôle 10.

L'unité de contrôle-commande 10 commande également le chariot 6 pour son accostage à l'extrémité amont 4 du convoyeur afin de réaliser le transfert d'un objet 3 sur le convoyeur 2, pour son évacuation de dessous le convoyeur 2 lorsque le chariot 6 arrive en bout de la portion ascendante de convoyage PCA et pour le déplacement d'un autre chariot 6 sous la portion de convoyage descendante PCD du convoyeur 2 afin de récupérer l'objet 3 transféré par l'extrémité aval 5 du convoyeur 2.

Sans restreindre la portée de l'invention, l'unité de contrôle commande 10 peut également commander le déplacement du même chariot 6 le long du convoyeur 2 de l'extrémité amont 4 jusqu'à l'extrémité aval 5.

Le chariot 6 peut ainsi circuler en boucle fermée, sous le convoyeur 2 de l'extrémité amont 4 vers l'extrémité aval 5 et à l'extérieur du convoyeur 2 de l'extrémité aval 5 vers l'extrémité amont 4.

Le chariot 6 selon l'invention est par exemple du type AGV (véhicule à guidage automatique).

Le plateau 7 du chariot s'étend sensiblement horizontalement, en forme de fourche ou de doigts et est conçu pour se peigner avec les sections 8 parallèles du convoyeur 2 lorsque le chariot 6 accoste l'extrémité amont 4 du convoyeur, comme représenté sur la figure 1.

Ainsi, lorsque le plateau 7 se peigne avec les sections 8 du convoyeur 2, l'objet 3 stocké sur le plateau 7 est déposé par gravité sur le tapis 9 du convoyeur 2.

Aussi, grâce à l'espace laissé libre sous le convoyeur 2, la coopération entre le chariot 6 et le convoyeur 2 se fait via une rampe 12 qui s'étend sous le convoyeur 2, et en particulier sous l'extrémité amont 4, la portion de convoyage ascendante PCA et l'extrémité aval 5.

Sans restreindre la portée de l'invention, la rampe 12 pourra éventuellement s'étendre sur toute la longueur du convoyeur 2.

La coopération entre le chariot 6 et la rampe 12 se fait par l'intermédiaire d'un levier 11 articulé sur le chariot 6 qui est mobile en déplacement vertical par rapport au plateau.

Le levier 11 est conçu pour coopérer avec la rampe 12 pendant le déplacement du chariot 6 sous le convoyeur 2 de telle sorte qu'en suivant la rampe 12 le levier 11 se déplace entre une position escamotée dans laquelle il s'efface sous le convoyeur 2 et une position déployée dans laquelle il s'étend en saillie au dessus du convoyeur 2 pour entrainer en déplacement un objet 3 sur le convoyeur 2.

Le levier 11 se déplace à travers une glissière du chariot lui imposant un déplacement vertical.

Le levier 11 est articulé au chariot 6 à l'aide d'une bielle 15 reliée au chariot par une liaison pivot. C'est la bielle qui coopère directement avec la rampe 12 lors du déplacement du chariot 6 sous le convoyeur 2.

La bielle et le levier 11 forme un ensemble articulé ici en forme de L déformable.

Ainsi, lorsque la bielle 15 coopère avec la rampe 12, la bielle 15 déplace le levier 11 de haut en bas en fonction de la hauteur de la rampe 12.

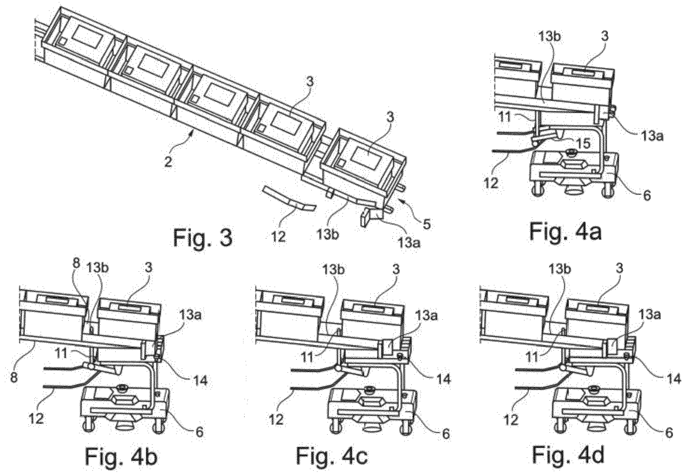

Le levier 11 du chariot 6 se présente sous la forme d'une fourche conçue pour se peigner entre les bandes du convoyeur lorsque le chariot 6 se déplace sous le convoyeur 2, comme représenté sur la figure 4b.

Le levier 11 forme également un dossier pour le plateau 7 du chariot 6 selon un angle d'environ 90° et permet de limiter la chute d'un objet 3 lors de son approche vers l'extrémité amont 4 du convoyeur.

Dans l'exemple représenté sur la figure 1, la rampe 12 s'étend sur toute la longueur de la portion de convoyage ascendante PCA de sorte à maintenir le levier 11 en position déployée.

On comprendra également que la rampe 12 pourra rester sensiblement horizontale le long de la portion de convoyage ascendante PCA du convoyeur 2 de telle sorte que l'élévation de la portion de convoyage ascendante PCA du convoyeur 2 permette au levier 11 de ne plus faire saillie à l'extrémité haute de la portion de convoyage ascendante PCA.

Toutefois, on pourra prévoir que la rampe 12 s'incline vers le sol S à l'extrémité haute de la portion de convoyage ascendante PCA de sorte que le levier 11 se positionne en position escamotée et permette l'évacuation du chariot 6 de dessous le convoyeur 2.

L'extrémité aval 5 du convoyeur comprend également une rampe 12 agencée de sorte à disposer le levier 11 en position déployé pour pousser un objet 3 et le transférer sur le chariot 6.

Toutefois, avant d'être poussé par le levier 11, l'extrémité aval 5 du convoyeur 2 comprend ici un sas 13 pour objet 3 comprenant une première butée 13a escamotable et une seconde butée 13b escamotable.

Le sas 13 permet ici de transférer les objets 3 un par un sur un chariot 6 dédié sans utiliser de mécanisme de transfert motorisé.

La cinétique de transfert d'un objet 3 en extrémité aval 5 par l'intermédiaire du sas 13 est représentée schématiquement sur les figures 4a à 4d.

La première butée 13a agencée à l'extrémité aval du convoyeur est conçue pour bloquer un objet 3 à l'extrémité aval 5 du convoyeur 2.

Le chariot 6 comprend un organe de poussée 14 conçu pour coopérer avec la première butée 13a lors de son déplacement sous l'extrémité aval 5 du convoyeur 2 de sorte qu'au contact de l'organe de poussée 14 la première butée 13a est escamotée sur les côtés du convoyeur 2 pour autoriser le transfert de l'objet 3 sur le plateau 7 du chariot 6.

La seconde butée 13b est quant à elle agencée en amont de l'extrémité aval 5 du convoyeur 2.

La seconde butée 13b est conçue pour être déplacée entre une position escamotée dans laquelle elle autorise le déplacement d'un objet 3 vers l'extrémité aval 5 du convoyeur 2 et une position fermée dans laquelle elle bloque un objet 3 en amont de l'extrémité aval 5 du convoyeur 2.

La seconde butée 13b comprend également une portion en saillie sur l'extrémité aval 5 du convoyeur 2 de telle sorte que la saillie coopère avec un objet 3 disposé en extrémité aval 5 du convoyeur 2.

Ainsi, lorsqu'un objet appuie sur la saillie, la seconde butée passe de la position escamotée à la position fermée. Le passage de la position fermée à escamotée se fait ici par retour élastique.

La seconde butée 13b est par exemple formée d'une pince comprenant deux bras qui s'étendent de chaque côté du convoyeur 2 le long de l'extrémité aval 5 du convoyeur et qui sont mobiles autour d'un axe A1.

La portion en saillie de la pince se situe sur vers l'extrémité aval 5 du convoyeur.

Ainsi, lorsqu'un objet 3 appuie contre la saillie de la seconde butée 13b, la butée 13b passe de sa position escamotée à sa position fermée.

Le sas 13 selon l'invention comprend ainsi :
- une première position, représentée sur les figures 2a et 2b, dans laquelle la première butée 13a est escamotée pour autoriser l'insertion d'un objet dans le sas 13 et dans laquelle la seconde butée 13b est en position fermée pour interdire tout transfert d'objet ;

- une seconde position, représentée sur les figures 2c, 3 et 4a, dans laquelle les première et seconde butées 13a et 13b sont fermées de sorte à bloquer l'objet 3 dans le sas 13 et à retenir les objets 3 qui glissent par gravité en amont sur le convoyeur 2.
- une troisième position, comme représenté sur les figures 4b à 4d, dans laquelle la première butée 13a bloque les objets 3 en amont sur le convoyeur 2 et dans laquelle la seconde butée 13b est en position escamotée pour permettre l'évacuation de l'objet 3 par l'extrémité aval 5.

## Revendications

1. Système (1) de convoyage d'objets (3) comprenant un convoyeur (2) d'objets s'étendant entre une extrémité amont (4) et une extrémité aval (5), et un chariot (6) navette motorisé à plateau (7) porteur d'objet, ledit chariot étant conçu pour accoster aux extrémités aval et amont du convoyeur de sorte à réaliser un transfert d'objet entre le chariot et le convoyeur, le convoyeur étant un convoyeur gravitaire sous lequel s'étend une rampe (12), le chariot étant apte à circuler sous le convoyeur et comprend un levier (11) mobile en déplacement vertical par rapport au plateau, ledit levier étant conçu pour coopérer avec la rampe pendant le déplacement du chariot sous le convoyeur de telle sorte qu'en suivant la rampe le levier se déplace entre une position escamotée dans laquelle il s'efface sous le convoyeur et une position déployée dans laquelle il s'étend en saillie au dessus du convoyeur pour entrainer en déplacement un objet sur le convoyeur, **caractérisé en ce que** le convoyeur comprend à son extrémité aval une première butée (13a) escamotable conçue pour bloquer un objet à l'extrémité aval du convoyeur, et **en ce que** le chariot comprend un organe de poussée (14) conçue pour coopérer avec la première butée lors de son déplacement sous l'extrémité aval du convoyeur de sorte qu'au contact de l'organe de poussée la première butée est écartée sur les côtés du convoyeur pour autoriser le transfert de l'objet sur le plateau du chariot.

2. Système de convoyage d'objets selon la revendication 1, **caractérisé en ce que** le convoyeur comprend une portion de convoyage ascendante (PCA) qui s'étend depuis son extrémité amont, et **en ce que** la rampe est conçue pour maintenir le levier en position déployée le long de ladite portion de convoyage ascendante.

3. Système de convoyage d'objets selon les revendications 1 ou 2, **caractérisé en ce que** le convoyeur comprend une portion de convoyage descendante (PCD) qui s'étend jusqu'à son extrémité aval dans le prolongement de la portion de convoyage ascendante.

4. Système de convoyage d'objets selon l'une quelconque des revendications précédentes, **caractérisé en ce que** la portion de convoyage descendante du convoyeur comprend une rampe (12) dont la pente se relève vers l'extrémité aval du convoyeur de sorte à positionner le levier de la position escamotée à la position déployée.

5. Système de convoyage d'objets selon l'une quelconque des revendications précédentes, **caractérisé en ce que** le convoyeur comprend une seconde butée (13b) escamotable en amont de l'extrémité aval du convoyeur, ladite seconde butée étant conçue pour être déplacée entre une position escamotée dans laquelle elle autorise le déplacement d'un objet vers l'extrémité aval du convoyeur et une position fermée dans laquelle elle bloque un objet en amont de l'extrémité aval du convoyeur, la seconde butée comprenant un élément en saillie sur le convoyeur conçu coopérer avec un objet disposé en extrémité aval du convoyeur pour passer de la position escamotée à la position fermée.

6. Système de convoyage d'objets selon l'une quelconque des revendications précédentes, **caractérisé en ce que** le plateau du chariot se présente sous la forme d'une fourche et le convoyeur sous la forme de deux sections (8) parallèles, la fourche étant conçue pour se peigner entre les sections du convoyeur lorsque le chariot se déplace sous l'extrémité amont et/ou aval du convoyeur.

7. Système de convoyage d'objets selon l'une quelconque des revendications précédentes, **caractérisé en ce que** le levier du chariot se présente sous la forme d'une fourche conçue pour se peigner entre les sections du convoyeur lorsque le chariot se déplace sous le convoyeur.

## Patentansprüche

1. System (1) zum Befördern von Gegenständen (3), umfassend einen Förderer (2) für Gegenstände, der sich zwischen einem stromaufwärtigen Ende (4) und einem stromabwärtigen Ende (5) erstreckt, und einen motorisierten Pendelwagen (6) mit einer Gegenstandsträgerplatte (7), wobei der Wagen zum Andocken an dem stromabwärtigen und dem stromaufwärtigen Ende des Förderers entworfen ist, um einen Transport eines Gegenstands zwischen dem Wagen und dem Förderer auszuführen, wobei der Förderer ein Schwerkraftförderer ist, unter dem sich eine Rampe (12) erstreckt, wobei der Wagen geeignet ist, um unter dem Förderer zu zirkulieren und einen Hebel (11) umfasst, der bezogen auf die Platte in vertikaler Verschiebung bewegbar ist, wobei der Hebel zum Zusammenwirken mit der Rampe während der Verschiebung des Wagens unter dem Förderer derart entworfen ist, dass sich der Hebel der Rampe folgend zwischen einer eingezogenen Position, in der er unter dem Förderer verschwindet, und einer ausgefahrenen Position, in der er sich über den Förderer vorspringend erstreckt, zum Mitverschieben eines Gegenstands auf dem Förderer verschiebt, **dadurch gekennzeichnet, dass** der Förderer an seinem stromabwärtigen Ende einen ersten einziehbaren Anschlag (13a) umfasst, der zum Blockieren eines Gegenstands an dem stromabwärtigen Ende des Förderers entworfen ist, und dass der Wagen ein Schubelement (14) umfasst, das zum Zusammenwirken mit dem ersten Anschlag, während es sich unter das stromabwärtige Ende des Förderers verschiebt, so entworfen ist, dass der erste Anschlag bei der Berührung mit dem Schubelement zum Ermöglichen des Transports des Gegenstands auf der Platte des Wagens an den Seiten des Förderers weggerückt wird.

2. Gegenstandsbeförderungssystem nach Anspruch 1, **dadurch gekennzeichnet, dass** der Förderer einen Aufwärtsbeförderungsabschnitt (PCA) umfasst, der sich von seinem stromaufwärtigen Ende erstreckt, und dass die Rampe zum Halten des Hebels in der ausgefahrenen Position entlang des Aufwärtsbeförderungsabschnitts entworfen ist.

3. Gegenstandsbeförderungssystem nach Anspruch 1 oder 2, **dadurch gekennzeichnet, dass** der Förderer einen Abwärtsbeförderungsabschnitt (PCD) umfasst, der sich bis zu seinem stromabwärtigen Ende in der Verlängerung des Aufwärtsbeförderungsabschnitts erstreckt.

4. Gegenstandsbeförderungssystem nach einem der vorstehenden Ansprüche, **dadurch gekennzeichnet, dass** der Abwärtsbeförderungsabschnitt des Förderers eine Rampe (12) umfasst, deren Neigung zu dem stromabwärtigen Ende des Förderers hin ansteigt, um den Hebel von der eingezogenen Position in die ausgefahrene Position zu positionieren.

5. Gegenstandsbeförderungssystem nach einem der vorstehenden Ansprüche, **dadurch gekennzeichnet, dass** der Förderer einen zweiten Anschlag (13b) umfasst, der stromaufwärts des stromabwärtigen Endes des Förderers einziehbar ist, wobei der zweite Anschlag zum Verschobenwerden zwischen einer eingezogenen Position, in der er die Verschiebung eines Gegenstands zu dem stromabwärtigen Ende des Förderers hin ermöglicht, und einer geschlossenen Position entworfen ist, in der er einen Gegenstand stromaufwärts des stromabwärtigen Endes des Förderers blockiert, der zweite Anschlag umfassend ein vorspringendes Element auf dem Förderer, der zum Zusammenwirken mit einem Gegenstand, der an dem stromabwärtige Ende des Förderers angeordnet ist, zum Übergehen von der eingezogenen Position in die geschlossene Position entworfen ist.

6. Gegenstandsbeförderungssystem nach einem der vorstehenden Ansprüche, **dadurch gekennzeichnet, dass** die Platte des Wagens die Form einer Gabel aufweist und der Förderer die Form von zwei parallelen Abschnitten (8) aufweist, wobei die Gabel zum Durchkämmen zwischen den Abschnitten des Förderers entworfen ist, während sich der Wagen unter dem stromaufwärtigen und/oder stromabwärtigen Ende des Förderers verschiebt.

7. Gegenstandsbeförderungssystem nach einem der vorstehenden Ansprüche, **dadurch gekennzeichnet, dass** der Wagenhebel die Form einer Gabel aufweist, die zum Durchkämmen zwischen den Abschnitten des Förderers entworfen ist, während sich der Wagen unter dem Förderer verschiebt.

## Claims

1. System (1) for conveying objects (3) comprising an object conveyor (2) which extends between an upstream end (4) and a downstream end (5), and a motor-driven shuttle carriage (6) having an object-carrying plate (7), said carriage being designed to dock at the downstream and upstream ends of the conveyor so as to transfer an object between the carriage and the conveyor, the conveyor being a gravity conveyor under which a ramp (12) extends, the carriage being capable of moving under the conveyor and comprises a lever (11) which is vertically movable with respect to the plate, said lever being designed to interact with the ramp when the carriage moves under the conveyor such that by following the ramp, the lever moves between a retracted position in which it disappears under the conveyor and a deployed position in which it projects above the conveyor so as to cause an object to move on the conveyor, **characterized in that** the conveyor comprises at its downstream end a first retractable stop (13a) which is designed to block an object at the downstream end of the conveyor, and **in that** the carriage comprises a thrust member (14) which is designed to interact with the first stop when it moves under the downstream end of the conveyor so that, when it makes contact with the thrust member, the first stop is pushed to the sides of the conveyor to allow the object to be transferred onto the plate of the carriage.

2. System for conveying objects according to claim 1, **characterized in that** the conveyor comprises an ascending conveying portion (PCA) which extends from its upstream end, and **in that** the ramp is designed to hold the lever in the deployed position along said ascending conveying portion.

3. System for conveying objects according to either claim 1 or claim 2, **characterized in that** the conveyor comprises a descending conveying portion (PCD) which extends as far as its downstream end in the extension of the ascending conveying portion.

4. System for conveying objects according to any of the preceding claims, **characterized in that** the descending conveying portion of the conveyor comprises a ramp (12) of which the slope rises toward the downstream end of the conveyor so as to position the lever from the retracted position into the deployed position.

5. System for conveying objects according to any of the preceding claims, **characterized in that** the conveyor comprises a second retractable stop (13b) upstream of the downstream end of the conveyor, said second stop being designed to be moved between a retracted position in which it allows an object to be moved toward the downstream end of the conveyor and a closed position in which it blocks an object upstream of the downstream end of the conveyor, the second stop comprising an element which projects over the conveyor and is designed to interact with an object arranged at the downstream end of the conveyor so as to go from the retracted position to the closed position.

6. System for conveying objects according to any of the preceding claims, **characterized in that** the plate of the carriage is in the shape of a fork and the conveyor is in the form of two parallel portions (8), the fork being designed to engage in a comb-like manner between the conveyor portions as the carriage moves under the upstream and/or downstream end of the conveyor.

7. System for conveying objects according to any of the preceding claims, **characterized in that** the lever of the carriage is in the shape of a fork which is designed to engage in a comb-like manner between the portions of the conveyor as the carriage moves under the conveyor.
